# EUROPÄISCHE PATENTANMELDUNG

(11) **EP 3 459 776 A1**
(43) Veröffentlichungstag der Anmeldung: **27.03.2019**
(21) Anmeldenummer: 18150701.3
(22) Anmeldetag: 09.01.2018
(51) Int. Cl.: B60K 15/03

(54) **DRUCKBEHÄLTER ODER DRUCKLEITUNG MIT EINER FLANSCHVERBINDUNG ERHÖHTER DRUCKBELASTBARKEIT**

(30) Priorität: 20.09.2017 DE 102017008785
(71) Anmelder: Barkhoff, Roland, 68161 Mannheim (DE)
(72) Erfinder: Barkhoff, Roland, 68161 Mannheim (DE)
(74) Vertreter: Kesselhut, Wolf

(57) **Zusammenfassung**

Ein Druckbehälter oder eine Druckleitung (1), umfassend eine erste Gehäusehälfte (2a) mit einem ersten daran geformten umlaufenden Flanschabschnitt (4a) und eine zweite Gehäusehälfte (2b) mit einem zweiten daran geformten umlaufenden Flanschabschnitt (4b), welche durch eine Schweißverbindung im Bereich der einander anliegenden Dichtflächen (6a, 6b) der ersten und zweiten Flanschabschnitte (4a, 4b) flüssigkeits-oder gasdicht miteinander verbunden sind, zeichnet sich dadurch aus, dass die aneinander angrenzenden Dichtflächen (6a, 6b) in einem Winkel (α) größer 0° gegenüber der Normalen (N) an die Innenwand des Druckbehälters im Bereich der Verbindungsstelle geneigt angeordnet sind.

## Beschreibung

Die Erfindung betrifft einen Druckbehälter oder eine Druckleitung mit einer Flanschverbindung erhöhter Druckfestigkeit gemäß dem Oberbegriff von Anspruch 1.

Auf dem Gebiet der Automobiltechnik ist es bekannt, Druckbehälter und Druckleitungen, wie beispielsweise Kühlmittelbehälter oder auch Zuleitungen zur Zufuhr von komprimierter Frischluft von einem Turbolader zum Einlass eines Verbrennungsmotors, aus Kunststoff zu fertigen. Um hierbei den Fertigungsprozess zu vereinfachen, werden die Druckbehälter, bzw. die Druckleitungen aus zwei Gehäusehälften aus thermoplastischem Kunststoffmaterial gefertigt, die jeweils einen Flansch aufweisen, über den die beiden Gehäusehälften thermisch miteinander verschweißt werden, um den Druckbehälter oder die Druckleitung zu schließen. Bei den bekannten Druckbehältern und Druckleitungen sind die Dichtflächen der ersten und zweiten umlaufenden Flanschabschnitte in einem Winkel von 0° gegenüber der Normalen an die Innenwand, bzw. die Außenwand des Druckbehälters bzw. der Druckleitung angeordnet, wodurch die miteinander verschweißten Dichtflächen nach dem Verschweißen in einer Ebene liegen, die sich zwischen den beiden Gehäusehälften erstreckt.

Da die Systemdrücke der in den Druckbehältern bzw. Druckleitungen geführten Medien, insbesondere der Kühlflüssigkeit im Kühlsystem und der verdichteten Frischluft, die den Verbrennungsmotoren von Kraftfahrzeugen über den Turbolader zugeführt werden, in den letzten Jahren zunehmend gestiegen sind, besteht das Problem, dass die umlaufenden Schweißnähte der Druckbehälter und Druckleitungen mitunter aufreißen und es dadurch zu einem unerwünschten Entweichen von Kühlflüssigkeit, bzw. Ladeluft kommt.

Demgemäß ist es eine Aufgabe der vorliegenden Erfindung einen Druckbehälter und eine Druckzuleitung zu schaffen, welche durch thermisches Verschweißen von zwei Gehäusehälften aus thermoplastischem Material geformt werden, die gegenüber den bekannten Druckbehältern und Druckleitungen aus Kunststoffmaterial mit vergleichbarer Wandstärke eine erhöhte Druckfestigkeit besitzen.

Diese Aufgabe wird erfindungsgemäß durch die Merkmale von Anspruch 1 gelöst.

Gemäß der Erfindung umfasst ein Druckbehälter oder eine Druckleitung eine erste Gehäusehälfte mit einem ersten daran geformten umlaufenden Flanschabschnitt und eine zweite Gehäusehälfte mit einem zweiten daran geformten umlaufenden Flanschabschnitt aus einem thermoplastischen Kunststoffmaterial, welche durch eine Schweißverbindung im Bereich der einander anliegenden Dichtflächen der ersten und zweiten Flanschabschnitte flüssigkeits- oder gasdicht miteinander verbunden sind. Die Erfindung zeichnet sich dadurch aus, dass die aneinander angrenzenden Dichtflächen in einem Winkel größer 0° gegenüber der Normalen an die Innenwand des Druckbehälters im Bereich der Verbindungsstelle geneigt angeordnet sind.

Durch die Erfindung ergibt sich der Vorteil, dass sich der Maximaldruck, mit welchem der Druckbehälter oder die Druckleitung belastet werden kann, ohne zusätzlichen Vorrichtungsaufwand beachtlich erhöhen lässt. Ein weiterer Vorteil der Erfindung besteht darin, dass durch die geneigte winklige Anordnung der aneinander anliegenden Dichtflächen vor und während des Verschweißens eine Zentrierung der beiden Gehäusehälften erhalten wird, welche die Ausrichtung derselben in der richtigen Schweißposition erleichtert.

Wie der Anmelder durch aufwändige Computersimulationen sowie Versuche gefunden hat, ergibt sich eine signifikante Erhöhung der Haltekräfte, welche die beiden Gehäusehälften im Falle einer Beaufschlagung des Gehäuses mit Überdruck zusammenhalten dann, wenn der Winkel im Bereich zwischen 5° und 45° liegt.

Der Winkel gegenüber der Normalen liegt bei der bevorzugten Ausführungsform der Erfindung zwischen 20° und 40°, insbesondere 25° und 35° und beträgt bevorzugt 30° mit einer Toleranz von ± 5°. Hierbei stellt es einen besonderen Vorteil dar, dass bei einem Winkel zwischen 20° und 40° nicht nur die Haltekräfte erheblich höher als bei einem Winkel von 0° sind, sondern dass auch die Konizität der Flanschabschnitte an der ersten Gehäusehälfte und der zweiten Gehäusehälfte hinreichend groß ist, um eine zuverlässige Zentrierung der beiden Gehäusehälfte beim Zusammenfügen zu gewährleisten.

Obgleich es durchaus denkbar ist, dass die beiden Gehäusehälften anstelle einer Schweißverbindung auch durch eine flächige Klebeverbindung der ebenen Flanschabschnitte miteinander verbunden werden, bestehen die erste und die zweite Gehäusehälfte wie bereits zuvor erwähnt bevorzugt aus einem thermoplastischen Kunststoffmaterial, welches durch Erwärmen auf eine Temperatur oberhalb des Schmelzpunkts des Materials verflüssigt werden kann, und welches nach dem Erkalten des Materials für eine durchgehende flächige Verbindung der beiden Flanschabschnitte sorgt. Das Verbinden der beiden Flanschabschnitte aus thermoplastischem Kunststoffmaterial kann beispielsweise durch Infrarotschweißen, Reibschweißen oder durch ein sonstiges bekanntes thermisches Schweißverfahren erfolgen.

Um sicherzustellen, dass das während des Schweißvorgangs aus dem Flanschbereich austretende verflüssigte Kunststoffmaterial sich nicht lokal in Form von größeren Tropfen oder Wülsten an der Außenseite der Flanschabschnitte abgelagert, kann es gemäß einer weiteren Ausführungsform der Erfindung vorgesehen sein, dass an den Stirnseiten des ersten und zweiten Flanschabschnitts auf der Außenseite der ersten und zweiten Gehäusehälfte ein umlaufender erster Labyrinthabschnitt geformt ist, in welchem während des Schweißvorgangs verflüssigtes thermoplastisches Kunststoffmaterial aufgenommen wird, welches aus dem Anlagebereich der ersten und zweiten Dichtflächen austritt. Hierdurch ergibt sich der Vorteil, dass der fertiggestellte Druckbehälter oder die Druckleitung nach dem Schweißvorgang ohne eine zusätzliche Nachbearbeitung der Flanschabschnitte einer nächsten Produktionsstufe zugeführt werden kann, da keine störenden verfestigten Kunststoffüberstände von den Flanschabschnitten entfernt werden müssen. Hierdurch wird in vorteilhafter Weise eine automatisierte Fertigung mit einer reduzierten Anzahl von Bearbeitungsschritten ermöglicht.

Bei der zuletzt beschriebenen Ausführungsform der Erfindung wird der erste umlaufende Labyrinthabschnitt an seiner Außenseite durch einen ersten umlaufenden Steg begrenzt, der an der zweiten Gehäusehälfte geformt ist und der zur Bildung einer das verflüssigte Kunststoffmaterial aufnehmenden Kammer oder Tasche einer umlaufenden Begrenzungsfläche gegenüberliegt, die an der ersten Gehäusehälfte geformt ist. Durch diese Ausgestaltung der Erfindung ergibt sich der Vorteil einer wohl definierten Außenwand der Flanschverbindung, die ein Austreten von Kunststoffmaterial aus der Kammer und ein Eindringen von Verunreinigungen in die Kammer von außen her wirksam verhindert.

In gleicher Weise kann an den Stirnseiten des ersten und zweiten Flanschabschnitts auf der Innenseite der ersten und zweiten Gehäusehälfte ein zweiter umlaufender Labyrinthabschnitt geformt sein, in welchem während des Schweißvorgangs verflüssigtes thermoplastisches Kunststoffmaterial aufgenommen werden kann, welches aus dem Anlagebereich der ersten und zweiten Dichtflächen während des Schweißvorgangs in das Innere des Behälters hin austritt.

Hierbei wird der zweite umlaufende Labyrinthabschnitt an seiner Außenseite, d.h. der im Behälterinneren liegenden, dem Behälterzentrum zugewandten Seite, durch einen zweiten umlaufenden Steg begrenzt, der an der zweiten Gehäusehälfte geformt ist, und der zur Bildung einer das verflüssigte Kunststoffmaterial aufnehmenden Kammer einer an der ersten Gehäusehälfte geformten umlaufenden inneren Begrenzungsfläche gegenüber liegt.

Der Druckbehälter ist wie bereits zuvor erwähnt bevorzugt ein Kühlflüssigkeits-Ausgleichsbehälter eines Kraftfahrzeugs, und die Druckleitung ein aus thermoplastischem Material geformtes Ladeluftrohr, über welches komprimierte Luft von einem Turbolader zum Brennraum eines Verbrennungsmotors geleitet wird. Die Verbindungsstelle, an der die beiden Flanschabschnitte in der erfindungsgemäßen Weise miteinander verbunden sind, verläuft hierbei vorzugsweise quer zur Längsrichtung der Druckleitung, d.h. in der Querschnittsebene, wobei die beiden Flanschabschnitte aufgrund der winkeligen Anordnung der umlaufenden Dichtflächen, welche miteinander verschweißt oder verklebt werden, nach Art einer Konusverbindung ineinander greifen, die aus einem Außenkonus und einem Innenkonus besteht.

Die Erfindung wird nachfolgend mit Bezug auf die Zeichnungen anhand von bevorzugten Ausführungsformen beschrieben.

In den Zeichnungen zeigen:
- Fig. 1: eine schematische Darstellung eines erfindungsgemäßen Druckbehälters,
- Fig. 2a: eine vergrößerte Querschnittsansicht der ersten und zweiten Gehäusehälfte mit den einander gegenüberliegend angeordneten ersten und zweiten Flanschabschnitten vor dem Verschweißen,
- Fig. 2b: eine schematische Querschnittsansicht der beiden Gehäusehälften im Bereich des ersten und zweiten Flanschabschnitts nach dem Verschweißen, und
- Fig. 3: eine schematische Darstellung einer weiteren Ausführungsform der Erfindung vor dem Zusammenfügen derselben, bei der die Flanschabschnitte ballig ausgeführt sind.

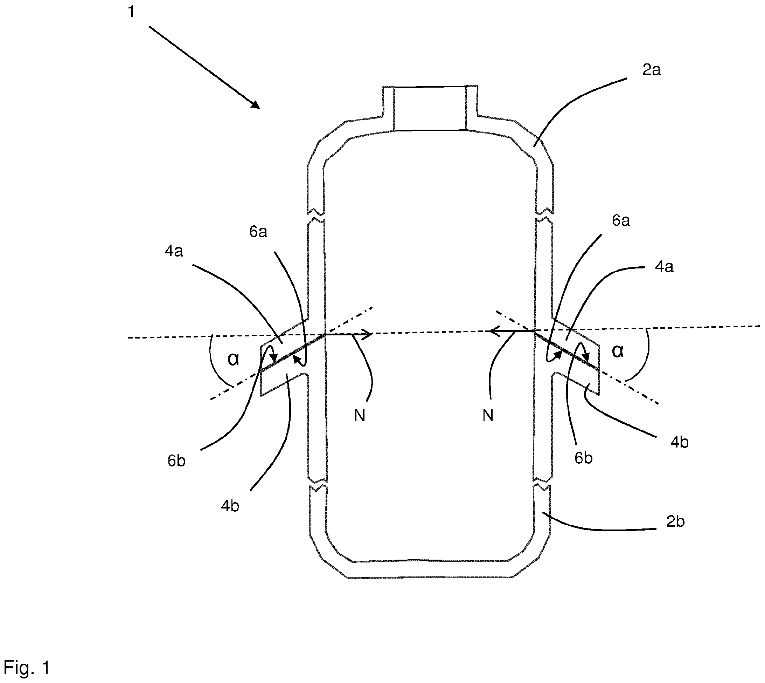

Wie in Fig. 1 gezeigt ist, umfasst ein Druckbehälter 1 eine erste Gehäusehälfte 2a, an der ein erster umlaufender Flanschabschnitt 4a geformt ist, der eine erste ebene Dichtfläche 6a besitzt. Die erste umlaufende Dichtfläche ist bei dem in Fig. 1 gezeigten Druckbehälter in einem Winkel α nach unten geneigt ausgebildet, d.h. gegenüber der Außenseite der ersten Gehäusehälfte 2a in einem nicht näher bezeichneten stumpfen Winkel von 90° + α.

Der erfindungsgemäße Druckbehälter 1 umfasst weiterhin eine zweite Gehäusehälfte 2b, an der ein zweiter umlaufender Flanschabschnitt 4b geformt ist, welcher eine zweite ebene Dichtfläche 6b aufweist, die gegenüber der in gestrichelten Linien eingezeichneten Normalen N ebenfalls geneigt angeordnet ist, sodass die beiden Dichtflächen 6a, 6b, die auch als Anlageflächen oder Kontaktflächen bezeichnet werden können, insgesamt gegenüber der Normalen N um den Winkel α geneigt sind, wenn die erste und zweite Gehäusehälfte 2a, 2b aufeinander gesetzt sind. Die Normale N stellt hierbei die Normale an die Innenwandfläche des Behälters 1 dar, die im Bereich der Flanschabschnitte 4a, 4b nach dem Verschweißen der Gehäusehälften 2a, 2b fluchtend, d.h. ohne Versatz ausgebildet ist.

Wie bereits zuvor erwähnt besitzt der Winkel α eine Größe, die bevorzugt im Bereich zwischen 5° und 45°, insbesondere zwischen 20° und 40° liegt, und die bevorzugt größer als 25° und kleiner als 35° ist. Bei der besonders bevorzugten Ausführungsform der Erfindung, bei der sich nach dem Verbinden der beiden Gehäusehälften 2a, 2b eine besonders hohe Haltekraft zwischen den beiden Flanschabschnitten 4a, 4b ergibt, liegt der Winkel α im Bereich von 30° ± 5°.

Die erste und zweite Gehäusehälfte 2a, 2b bestehen aus einem thermoplastischen Kunststoffmaterial, beispielsweise aus PA.6 GF, PPS, PP, die durch einen thermischen Schweißvorgang, beispielsweise durch eine thermische Erwärmung der Dichtflächen/Kontaktflächen 6a, 6b oder auch durch Infrarotschweißen, Reibschweißen oder durch ein sonstiges Erwärmen der Dichtflächen an ihrer Oberfläche verflüssigt und nach dem Aneinanderpressen und Erkalten des Kunststoffmaterials großflächig miteinander verbunden werden.

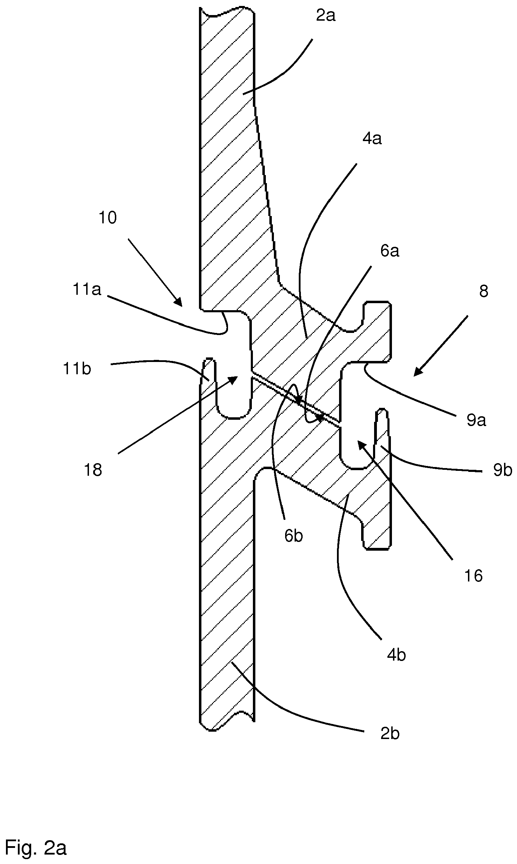

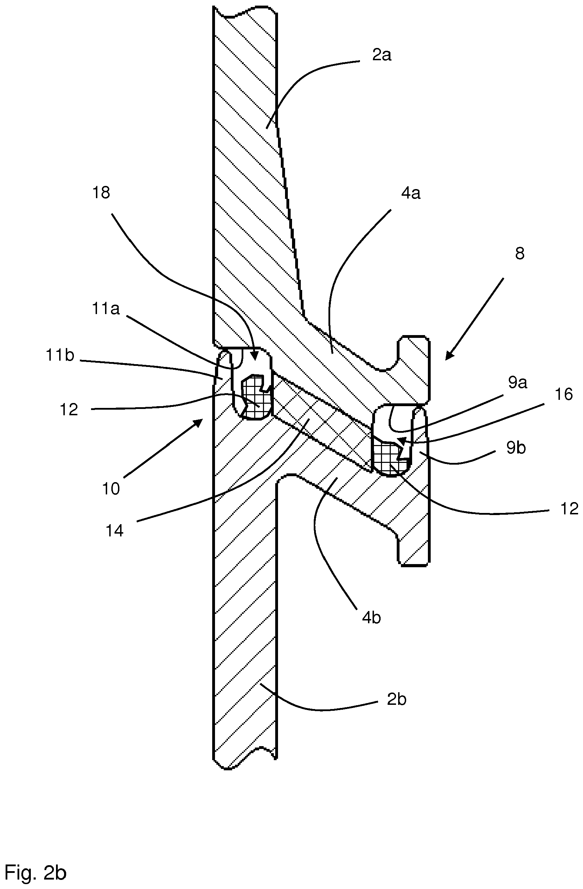

Wie der Darstellung der Fig. 2a und 2b weiterhin entnommen werden kann, ist an den Stirnseiten des ersten und zweiten Flanschabschnitts 4a, 4b auf der Außenseite der ersten und zweiten Gehäusehälfte 2a, 2b bei der bevorzugten Ausführungsform der Erfindung ein erster Labyrinthabschnitt 8 geformt, der dazu dient, während des Schweißvorgangs verflüssigtes thermoplastisches Kunststoffmaterial 12 aufzunehmen, welches aus dem Anlagebereich 14 der beiden Dichtflächen 6a, 6b zur Außenseite des Behälters 1 hin austritt.

Um hierbei einen undefinierten Austritt des verflüssigten Kunststoffmaterials 12 aus dem ersten Labyrinthabschnitt 8 zu unterbinden, umfasst der erste umlaufende Labyrinthabschnitt 8 an seiner Außenseite einen ersten umlaufenden Steg 9b, der vorzugsweise an der zweiten Gehäusehälfte 2b geformt ist, und der zur Bildung einer das verflüssigte Kunststoffmaterial 12 aufnehmenden Kammer 16 dient, die einer an der ersten Gehäusehälfte 2a geformten umlaufenden Begrenzungsfläche 9a gegenüber liegt. Die Höhe des ersten Steges 9b, der sich in der Schweißposition der zweiten Gehäusehälfte 2b in der vertikalen Richtung nach oben erstreckt, ist dabei so bemessen, dass die Begrenzungsfläche 9a, die sich während des Verschweißvorgangs bevorzugt horizontal erstreckt, an der oberen Kante des Steges 9b anliegt, sodass nach dem Abschluss des Schweißvorgangs, bei welchem sich die beiden Flanschabschnitte 4a, 4b auf einander zu bewegen und der Abstand zwischen der Begrenzungsfläche 9a und der Spitze des Steges 9b stetig verringert wird, unmittelbar aneinander liegen. Hierdurch wird eine in sich geschlossene umlaufende Kammer 16 gebildet, die das verflüssigte Schmelzgut 12 während des Schweißvorgangs zuverlässig aufnimmt und dieses nach dem Erkalten des Materials zuverlässig einschließt, sodass keine Raupen oder Stränge von erkaltetem Schmelzgut von der Außenseite des fertig verschweißten Druckbehälters herabhängen.

Wie der Darstellung der Fig. 2a und 2b weiterhin entnommen werden kann, ist auf der Innenseite der ersten und zweiten Gehäusehälfte 2a, 2b, d.h. auf der Seite der Gehäusehälften 2a, 2b, die die Innenwand des fertigen Druckbehälters 1 bilden, ein zweiter umlaufender Labyrinthabschnitt 10 geformt, in welchem während des Schweißvorgangs verflüssigtes thermoplastisches Kunststoffmaterial 12 aufnehmbar ist, das aus dem Anlagebereich 14 der ersten und zweiten Dichtflächen 6a, 6b während des Schweißvorgangs zur Innenseite des Behälters 1 hin austritt.

In gleicher Weise wie zuvor im Zusammenhang mit dem ersten umlaufenden Labyrinthabschnitt 8 beschrieben, besitzt auch der zweite umlaufende Labyrinthabschnitt 10 an seiner Außenseite einen zweiten umlaufenden Steg 11, der sich ebenfalls in Aufwärtsrichtung erstreckt, und der zur Bildung einer das verflüssigte Kunststoffmaterial 12 aufnehmende Kammer 18 einer beim Verschweißen des Behälters 1 vorzugsweise horizontal verlaufenden umlaufenden Begrenzungsfläche 11a gegenüber liegt, die an der ersten Gehäusehälfte 2a geformt ist. Die Länge des zweiten Steges 11b ist in gleicher Weise wie die Länge des ersten Steges 9b so gewählt, dass der Abstand zwischen der Spitze des Steges 11b und der Begrenzungsfläche 11a nach der Beendigung des Schweißvorgangs minimal ist, und die Spitze des Steges 11b bevorzugt unmittelbar an der Begrenzungsfläche 11a anliegt. Hierdurch wird sichergestellt, dass das in der Kammer 18 aufgenommene Schmelzgut 12 beim späteren Betrieb des Druckbehälters durch das darin aufgenommene heiße Kühlmedium nicht aus der Kammer 18 herausgespült werden kann, sondern zuverlässig in der Kammer 18 eingeschlossen ist. Dies verhindert es, dass die mitunter sehr engen Kühlkanäle in Kühlsystemen durch abgelöste Teile des in der Kammer 18 aufgenommenen, erhärteten Kunststoffmaterials 12 zu einer Beeinträchtigung des Kühlsystems führen können.

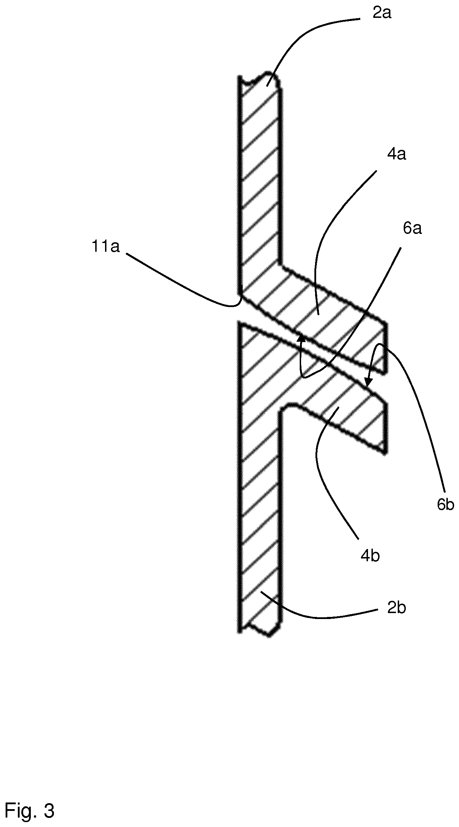

Gemäß einem weiteren der Erfindung zugrunde liegenden Gedanken sind die Dichtflächen 6a und 6b der zu verschweißenden Flanschabschnitte 4a, 4b jeweils ballig ausgeführt, d.h. besitzen eine konvex gekrümmte Oberfläche, wie dies in Fig. 3 angedeutet ist. Der Krümmngsradius der jeweiligen Dichtfläche 6a, 6b kann z.B. 30 bis 80 mm betragen und ist so gewählt, dass nach dem Verschweißen der beiden Flanschabschnitte 4a, 4b eine plane Anlage derselben erfolgt, ohne dass zur Innenseite, bzw. zur Außenseite des Gehäuses 2 hin ein Zwischenraum entsteht. Durch die konvex gekrümmte Form, d.h. ballig Ausgestaltung der Dichtflächen der beiden Flanschabschnitte 6a, 6b ergibt sich der Vorteil, dass Lufteinschlüsse zwischen den Flanschabschnitten wirksam verhindert werden. Diese entstehen dadurch, dass Materialanhäufungen im Bereich der Flanschabschnitte, d.h. Bereiche, in denen mehr Kunststoffmaterial als in anderen Bereichen vorhanden ist, während des Verschweißens oftmals nach innen einfallen und dadurch zu einer (konkaven) Vertiefung in der Dichtfläche führen, in der sich Luft ansammelt, die nach dem Erkalten des Kunststoffmaterials zu einem Lufteinschluss führt, welcher die Verbindung nachteilig schwächt.

Durch die konvexe Krümmung, d.h. ballige Ausgestaltung der betreffenden Dichtfläche 6a, 6b eines oder bevorzugt auch beider Flanschabschnitte 4a, 4b kann derartigen Lufteinschlüssen dadurch entgegen gewirkt werden, dass eine Vertiefung in der erwärmten Dichtfläche, die z.B. durch eine erhöhte Materialstärke bedingt ist, durch das angeschmolzene Kunststoffmaterial beim Aneinanderpressen der beiden Flanschabschnitte aufgefüllt wird. Hinzu kommt, dass beim Aneinanderpressen der beiden Gehäusehälften während des Fügevorgans das flüssige Kunststoffmaterial vom höchsten Anlagepunkt/Scheitelpunkt der Dichtfläche 6a, 6b aus, der bevorzugt im Zentrum der jeweiligen Dichtfläche liegt, jeweils nach außen verdrängt wird. Dies führt wiederum dazu, dass zwischen den beiden Dichtflächen 6a, 6b eingeschlossene Luft vom Scheitelpunkt aus zu den beiden Rändern der jweiligen Flanschabschnitte 4a, 4b hin aus dem angeschmolzenen flüssigen Kunststoffmaterial ausgetrieben wird, so dass die beiden Dichtflächen 6a, 6b nach dem Erkalten des Kunststoffmaterials ohne Lufteinschlüssse plan anliegend unter einem Winkel α von bevorzugt 30° gegenüber der Normalen N an die Innenwand des Druckbehälters, wie in Fig. 1 gezeigt, miteinander verbunden sind. Wie die Anmelderin gefunden hat, lässt sich durch die ballige Ausführung der Dichtflächen, die in Fig. 3 übertrieben dargestellt ist, die Druckfestigkeit der Flanschverbindung in vorteilhafter Weise weiter erhöhen.

Obgleich die umlaufenden Flanschabschnitte 4a, 4b in den Zeichnungen als Flanschabschnitte dargestellt sind, die sich zur Vergrößerung der Dichtfläche 6a, 6b, bzw. Anlagefläche über die Außenseite, bzw. Innenseite des Gehäuses 2 hinaus erstrecken, sollen von der Erfindung auch solche Ausführungsformen mit umfasst sein, bei denen die Dichtflächen 6a, 6b der Flanschabschnitte 4a, 4b als geneigt zur Normalen N verlaufende Stoßflächen ausgeführt sind, die ausschließlich innerhalb der Wand der ersten, bzw. zweiten Gehäusehälfte 2a, 2b liegen.

### Liste der Bezugszeichen

- 1: Druckbehälter oder Druckleitung
- 2a: erste Gehäusehälfte
- 2b: zweite Gehäusehälfte
- 4a: erster Flanschabschnitt
- 4b: zweiter Flanschabschnitt
- 6a: Dichtfläche des ersten Flanschabschnitts
- 6b: Dichtfläche des zweiten Flanschabschnitts
- 8: erster Labyrinthabschnitt
- 9a: Begrenzungsfläche
- 9b: Steg des inneren Labyrinthabschnitts
- 10: zweiter Labyrinthabschnitt
- 11a: Begrenzungsfläche
- 11b: Steg des äußeren Labyrinthabschnitts
- 12: thermoplastisches Kunststoffmaterial
- 14: Anlagebereich
- 16: Kammer des äußeren Labyrinthabschnitts
- 18: Kammer des zweiten inneren Labyrinthabschnitts

- N: Normale

## Patentansprüche

1. Druckbehälter oder Druckleitung (1), umfassend eine erste Gehäusehälfte (2a) mit einem ersten daran geformten umlaufenden Flanschabschnitt (4a) und eine zweite Gehäusehälfte (2b) mit einem zweiten daran geformten umlaufenden Flanschabschnitt (4b), welche durch eine Schweißverbindung im Bereich der einander anliegenden Dichtflächen (6a, 6b) der ersten und zweiten Flanschabschnitte (4a, 4b) flüssigkeits- oder gasdicht miteinander verbunden sind,
**dadurch gekennzeichnet, dass**
die aneinander angrenzenden Dichtflächen (6a, 6b) in einem Winkel (α) größer 0° gegenüber der Normalen (N) an die Innenwand des Druckbehälters im Bereich der Verbindungsstelle geneigt angeordnet sind.

2. Druckbehälter nach Anspruch 1,
**dadurch gekennzeichnet, dass**
der Winkel (α) im Bereich zwischen 5° und 45°, insbesondere zwischen 20° und 40°, bevorzugt zwischen 25° und 35° liegt, und besonders bevorzugt 30° ± 5° beträgt.

3. Druckbehälter oder Druckleitung nach Anspruch 1,
**dadurch gekennzeichnet, dass**
die erste und die zweite Gehäusehälfte (2a, 2b) aus einem thermoplastischen Material bestehen und dass der erste und der zweite Flanschabschnitt (4a, 4b) durch Infrarotschweißen, Reibschweißen oder durch ein thermisches Schweißverfahren miteinander verbunden sind.

4. Druckbehälter oder Druckleitung nach Anspruch 3,
**dadurch gekennzeichnet, dass**
an den Stirnseiten des ersten und zweiten Flanschabschnitts (4a, 4b) auf der Außenseite der ersten und zweiten Gehäusehälfte (2a, 2b) ein umlaufender erster Labyrinthabschnitt (8) geformt ist, in welchem während des Schweißvorgangs verflüssigtes thermoplastisches Kunststoffmaterial (12) aufnehmbar ist, welches aus dem Anlagebereich (14) der ersten und zweiten Dichtflächen (6a, 6b) austritt.

5. Druckbehälter oder Druckleitung nach Anspruch 4,
**dadurch gekennzeichnet, dass**
der erste umlaufende Labyrinthabschnitt (8) an seiner Außenseite durch einen ersten umlaufenden Steg (9b) begrenzt wird, der an der zweiten Gehäusehälfte (2b) geformt ist, und der zur Bildung einer das verflüssigte Kunststoffmaterial (12) aufnehmenden Kammer (16) einer an der ersten Gehäusehälfte (2a) geformten umlaufenden Begrenzungsfläche (9a) gegenüber liegt.

6. Druckbehälter oder Druckleitung nach einem der vorhergehenden Ansprüche,
**dadurch gekennzeichnet, dass**
an den Stirnseiten des ersten und zweiten Flanschabschnitts (4a, 4b) auf der Innenseite der ersten und zweiten Gehäusehälfte (2a, 2b) ein zweiter umlaufender Labyrinthabschnitt (10) geformt ist, in welchem während des Schweißvorgangs verflüssigtes thermoplastisches Kunststoffmaterial (12) aufnehmbar ist, welches aus dem Anlagebereich (14) der ersten und zweiten Dichtflächen (6a, 6b) austritt.

7. Druckbehälter oder Druckleitung nach Anspruch 6,
**dadurch gekennzeichnet, dass**
der zweite umlaufende Labyrinthabschnitt (10) an seiner Außenseite durch einen zweiten umlaufenden Steg (11b) begrenzt wird, der an der zweiten Gehäusehälfte (2b) geformt ist, und der zur Bildung einer das verflüssigte Kunststoffmaterial (12) aufnehmenden Kammer (18) einer an der ersten Gehäusehälfte (2a) geformten umlaufenden Begrenzungsfläche (11a) gegenüber liegt.

8. Druckbehälter oder Druckleitung nach einem der vorhergehenden Ansprüche,
**dadurch gekennzeichnet, dass**
die Dichtfläche (6a) des ersten Flanschabschnitts (4a) und/oder die zweite Dichtfläche (6b) des zweiten Flanschabschnitts (4b) vor dem Verbinden der Flanschabschnitte konvex gekrümmt ist.

9. Druckbehälter oder Druckleitung nach Anspruch 8,
**dadurch gekennzeichnet, dass**
der Scheitelpunkt der konvexen Krümmung der ersten und/oder zweiten Dichtfläche (6a, 6b) im Zentrum der Dichtfläche liegt.

10. Druckbehälter oder Druckleitung nach Anspruch 8 oder 9,
**dadurch gekennzeichnet, dass**
der Krümmungsradius der ersten und/oder zweiten konvex gekrümmten Dichtfläche (6a, 6b) im Bereich von 30 mm bis 80 mm liegt.

11. Druckbehälter nach einem der vorhergehenden Ansprüche,
**dadurch gekennzeichnet, dass**
dieser ein Kühlflüssigkeits-Ausgleichsbehälter eines Kraftfahrzeugs ist.

12. Druckleitung nach einem der Ansprüche 1 bis 10,
**dadurch gekennzeichnet, dass**
diese ein aus thermoplastischem Material geformtes Ladeluftrohr zur Zufuhr von komprimierter Luft von einem Turbolader zum Brennraum eines Verbrennungsmotors ist.
